# EUROPEAN PATENT APPLICATION

(11) **EP 1 780 935 A2**
(43) Date of publication of application: **02.05.2007**
(21) Application number: 06255498.5
(22) Date of filing: 25.10.2006
(51) Int. Cl.: H04L 9/08

(54) **A secure computer network**

(30) Priority: 25.10.2005 GB 0521663
(71) Applicant: Cryptara Limited, Salisbury, Wiltshire SP5 3PL (GB)
(72) Inventor: McMullan Hawthorne, William, Kingswear, TQ6 0BB (GB)
(74) Representative: Brown, Michael Stanley

(57) **Abstract**

A computer network system for a defined group of users includes a plurality of individual terminals and means are provided whereby, before a sender and receiver start sending documents, they first establish a high-strength randomly generated MUTUAL KEY, known only to themselves and to any other users within the group.

## Description

### Field of the Invention

This invention relates to computer networks and, more particularly, to a computer network arranged to provide a high level of security.

The most common first step in encrypting a document, prior to transmitting it to a receiver, is to generate a secret session key. This is then used to encrypt the document. The session key itself is then encrypted using an encryption means known only to the sender and the receiver. The encrypted session key is then added as a header to the message before transmission. The receiver uses the secret means shared with the sender to decrypt the session key, which is then used to decrypt the document.

In US Patent Specification No. 6,018,583 there is described a computer network system which comprises a plurality of individual remote terminals and a central file server, each terminal being arranged to hold, in a memory thereof, an encrypted unique variable and unique first and second conjugates for each user authorised to use that terminal, the second conjugate being a password-encrypted form of the first conjugate.

It is an object of the present invention computer network system which does not require a central file server and which does not require an encrypted session key as a header.

### Summary of the Invention

According to the present invention there is provided a computer network system for a defined group of users which includes a plurality of individual terminals and in which means are provided whereby, before a sender and receiver start sending documents, they first establish a high-strength randomly generated MUTUAL KEY, known only to themselves and to any other users within the group.

Means are preferably provided whereby, prior to encryption of a document, the sender calculates a HASH VALUE of the document. The use of a hash is well established in encryption technology. (A well-designed hash is a succinct summary of the entirety of the document and is designed so that it is mathematically infeasible to alter the document to the slightest degree while preserving the hash value.) A hash is in reality an elaborate form of check-sum.

### Example:

"You owe me £1000". Checksum = 16 (the number of characters including spaces.)
This is not very useful because "You owe me £2000" has the same checksum! A hash is therefore a very great design challenge. A hash algorithm exists that can take a very large file and produce a 12-figure hex value, typically, 4590AC990F71. It is established in the literature of cryptology that it is mathematically impossible to alter the document while preserving the hash.

The system preferably includes means whereby a header is formed by concatenating the hash value with a date value, a time value to the nearest second, and a sequence number, which may be pseudo-random. These concatenated elements form a SALT that is inputed into the MUTUAL KEY. The components of the hash ensure that the salt value is non-repeating. The use of a salt is well established in encryption technology. (A well-designed salt has the effect of "refreshing" a key by setting off comprehensive alteration mechanisms that radically alter the entire key.) The refreshed mutual key preferably becomes the set of seeds used to generate the session key. Since the salt is non-repeating, the refreshed mutual key is also non-repeating.

### An example of a simple design of salt:

Key: 456589098934567890
Salt 123:
Refreshed key created by adding 123 along the length of the key: 579712221057690013

The receiver uses the header to recreate the salted mutual key, allowing him to recreate the session key and hence the original message. The receiver re-calculates the hash of the plain message and compares it with the hash in the header. If both agree the following can be inferred:

If the plain document had been altered by any intruder, he would also have to re-calculate the hash. But since he does not know the mutual key, he cannot create the primitives required for the formation of the session key. It therefore follows that agreement of both hashes confirms the authenticity of the sender, by reason of him having the correct mutual key, and also confirms the integrity of the document.

### A worked example:

MUTUAL KEY:
D7D8AA377A35251C5E4279D92B6CA4524BCBE28382EE86906FC 0F4186025B1 C66C824EAE45B3B580B5AC444094365ABF9E4A81 E271 EF9DF3D8705603B18CCD3FE4C930D261 F85440589DBA07C D29D4634865C02DED509977E6FB1AF418D44CF0F1483AF2270B 0E5A0C2B56EFC4E0414AC98ADED9D82B5B988CC45C19091148 F6880FC3AD9B3FBC67281290819C3C889FD395C680AC372C646 E43166AFEB3D3F4A7639E1B985A1320749AF1525C7F1EB4DEEA E58D9650815FA1A511195618A39F30CFF0ED2B13105AFF47E4DF 7CEEB63CE6AC3A1 CADD9AAA5681 B67F5B3D2EAB2DB18B59AC A75027B85064FB3FED72FCD6B87BA57747757E2E9CEEDCB5AB 7E110F5EF7CF1455C26FAA157FE642BC49386809BD39F40F4B36 EAAEFACF981 B71 CFCFCD77824A0BF42AA01 DC6C47DB0EF050 E51A49249C0FCA26EC7154C51E18252A62DE1595FD34271442A 32F2B85A15053254E4E05E070B4ED8C804AD2CA6E445139D401 8961364F329AAC792F0CF40CD33BC09CB24CFBB7A242FCFE03 9C2B074C
SALT:
9E611 E05070710495900012F8354EE4D86

MUTUAL KEY REFRESHED BY SALT:
DCB00B3797046A0FD7E012DA2022A7DACF8DAD82A015AD35D0 BFBDDFE7AB78854CE4372054EE42102FD68F779081 C22B75FDE 04C84FE9BB6C2B13FF446D375A12F8FC8689DAE2543748A05BB 77E06814FB6B57F32D6851E17BB476AD76F15E64D12CA2C4FC7 62ACD9B646C14BACAEAF12787156E65FE0C0898AF052EE6CB5 F9555A9455C571645535D91 EF9E88AFC9E0A2DC7FEBAF878BFC CA276A1FB464FECCEBE507F5113CE1A8E502326341808F5EED C40ACC154A62947C89775867676C80B146522385BE961A428090 EE9B92D290F1510B58E0DC9BC5C4DC42C50C3CCF18C50CBE8 1 DDD52B5BF0DAD4BF88860226E1D70DBDB8DF4104AE9991528 A00B2E7C04926920659237E91 DF481 D253C11 CEA67FB1 C08F3B 03CEFF98DE4162509498D4B848DFDB08FE1476C600B02D4724C 289130EE0BF024E123B1 D5E2EA63F2055043491 E1AE1099C3881 319AE3CF5955726CE7311 ED20E13CBB135C31A69750AAD664FB BE17CBC4F26A433641302942C2CCA2FF0FD28F35D3D3D100EC A7EBE433

SESSION KEY CREATED BY THE REFRESHED MUTUAL KEY:
CDB0AE8B96790871481DCD2BFD5C648E9DCBE7182F50754F6B 9EA5FA4916C3D57064F163C51E17F40BOA63D43B9A1E31DF6B7 E2E57413D5AD55010E164F8AEB10A3AF4EEE41F7891

## Claims

1. A computer network system for a defined group of users which includes a plurality of individual terminals and in which means are provided whereby, before a sender and receiver start sending documents, they first establish a high-strength randomly generated MUTUAL KEY, known only to themselves and to any other users within the group.

2. A computer network system as claimed in Claim 1, in which means are provided whereby, prior to encryption of a document, the sender calculates a HASH VALUE of the document.

3. A computer network system as claimed in Claim 2, which includes means whereby a header is formed by concatenating the hash value with, inter alia, a date value.

4. A computer network system as claimed in Claim 3, in which the hash value is also concatenated with a time value to the nearest second, and a sequence number.

5. A computer network system as claimed in Claim 4, in which the concatenated elements form a SALT that is inputed into the MUTUAL KEY.

6. A computer network system as claimed in Claim 5, in which means are provided whereby the receiver uses the header to recreate the salted mutual key, allowing him to recreate the session key and hence the original message.

7. A computer network system as claimed in Claim 6, in which means are provided whereby the receiver can re-calculate the hash of the plain message and compare it with the hash in the header.
